(19) Europäisches Patentamt
European Patent Office
Office européen des brevets

(11) **EP 2 637 178 B1**

(12) **EUROPEAN PATENT SPECIFICATION**

(45) Date of publication and mention
of the grant of the patent:
**22.01.2025 Bulletin 2025/04**

(21) Application number: **11838267.0**

(22) Date of filing: **04.11.2011**

(51) International Patent Classification (IPC):
*H01B 3/30* (2006.01)    *C08L 23/12* (2006.01)
*C08F 10/06* (2006.01)    *H01B 9/02* (2006.01)

(52) Cooperative Patent Classification (CPC):
(C-Sets available)
**H01B 3/28; C08L 23/10; C08L 23/16; H01B 3/441;**
C08F 10/06; C08L 23/0815; C08L 2205/02   (Cont.)

(86) International application number:
**PCT/KR2011/008383**

(87) International publication number:
**WO 2012/060662 (10.05.2012 Gazette 2012/19)**

(54) **INSULATING COMPOSITION AND ELECTRIC CABLE COMPRISING SAME**

ISOLIERENDE ZUSAMMENSETZUNG UND ELEKTRISCHES KABEL DAMIT

COMPOSITION ISOLANTE ET CÂBLE ÉLECTRIQUE LA COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2011   KR 20110079653
05.11.2010   KR 20100109989**

(43) Date of publication of application:
**11.09.2013   Bulletin 2013/37**

(73) Proprietor: **LS Cable & System Ltd.
Anyang-si, Gyeonggi-do 431-848 (KR)**

(72) Inventors:
• **AN, Young-Jun
Yangsan-si
Gyeongsangnam-do 626-870 (KR)**
• **KIM, Seon-Tae
Seoul 157-280 (KR)**
• **NAM, Jin-Ho
Namyangju-si
Gyeonggi-do 472-746 (KR)**
• **KIM, Ung
Gunpo-si
Gyeonggi-do 435-749 (KR)**

• **KIM, Hyung-Jun
Chilgok-gun
Gyeongsangbuk-do 718-831 (KR)**
• **KIM, Hyun-Chil
Yongin-si
Gyeonggi-do 449-832 (KR)**
• **KWON, Jung-Ji
Gumi-si
Gyeongbuk 730-749 (KR)**
• **RYU, Ik-Hyun
Anyang-si
Gyeonggi-do 430-835 (KR)**

(74) Representative: **advotec.
Patent- und Rechtsanwaltspartnerschaft
Tappe mbB
Widenmayerstraße 4
80538 München (DE)**

(56) References cited:
**EP-A1- 0 893 801      JP-A- 2004 528 681
JP-A- 2009 019 190      KR-A- 20100 070 020
US-A1- 2006 074 177      US-A1- 2009 142 527
US-A1- 2010 122 833      US-B1- 6 372 344**

**(Cont. next page)**

(52) Cooperative Patent Classification (CPC): (Cont.)

C-Sets
**C08L 23/10, C08L 23/10, C08L 2205/02;
C08L 23/16, C08L 23/14**

**Description**

TECHNICAL FIELD

The present disclosure relates to an electric cable, and more particularly, to an insulating composition of an electric cable.

The insulating composition of the present disclosure contains a non-crosslinking material, and an electric cable including an insulating layer containing such a non-crosslinking material allows a conductor to be designed with a smaller diameter.

BACKGROUND ART

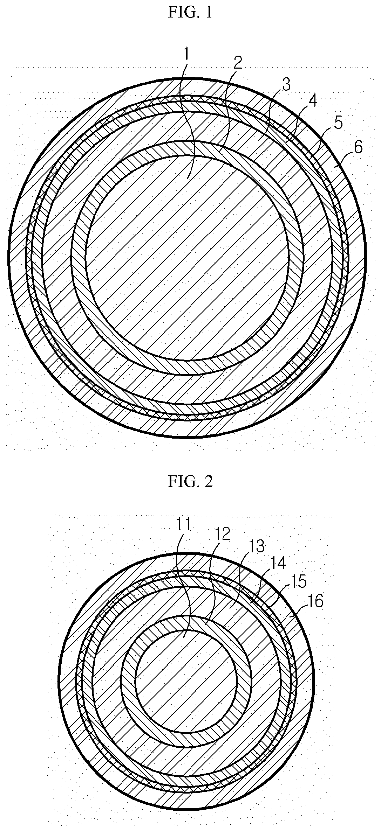

Fig. 1 shows an electric cable of a most general type. The electric cable of Fig. 1 includes an interior semiconductive layer 2, an insulating layer 3, an exterior semiconductive layer 4, a shielding layer 5 and a sheath layer 6 with a conductor 1 as the center. In the existing technique, the insulating layer is generally made of polyethylene, particularly low density polyethylene (LDPE).

Most International Standards such as IEC and ICEA regulate a maximum allowable temperature of 90°C for a conductor of an electric cable. In order to meet the maximum allowable temperature of a conductor, the insulating material used for forming an insulating layer should have excellent heat resistance at temperatures of 121°C to 136°C.

In addition, various attempts have recently been made to reduce the diameter of the conductor in order to design a lightweight and compact electric cable. If the diameter of the conductor of the electric cable decreases as described above, the heating temperature of the conductor increases over 90°C, which makes the polyethylene having a melting point of just 100°C to 125°C not suitable for the insulating layer.

Therefore, in order to overcome such limitations caused by an existing temperature condition, crosslinked polyethylene obtained by crosslinking polyethylene in various ways has been used as an insulator of an electric cable.

Such crosslinking may be performed in a high-temperature high-pressure steam crosslinking tube or in a high-temperature insert gas crosslinking tube. **In** order to implement such two kinds of crosslinking processes, very expensive equipment is required, and additional costs are also needed to maintain the equipment. Moreover, in order to crosslink low density polyethylene (LDPE) used for the insulating layer, a chemical crosslinking method is generally used. However, for such chemical crosslinking, peroxides should be decomposed at high temperature to form radicals. This decomposing process is very sensitive to temperature. Therefore, before an extruded polymer is normally crosslinked in a crosslinking tube, peroxides serving as a crosslinking agent may be abnormally decomposed in an extruder, which causes undesired crosslinking and abnormal extrusion. **In** this case, the insulator may have an inferior appearance, which may cause problems in general characteristics and electric characteristics. **In** addition, the chemical crosslinking generates crosslinking byproducts during the crosslinking process. The crosslinking byproducts generated during the chemical crosslinking contain a lot of polar components, which deteriorate electric characteristics of the insulator. **In** particular, the insulation breakdown resistance is lowered, which gives an adverse effect to the quality. Therefore, a chemically-crosslinked product requires a drying process for removing crosslinking byproducts inevitably generated. However, such a drying process extends production time and demands additional process equipment. **In** addition, even though the demand for material recycling is recently increasing in terms of environment protection, there exists a disadvantage in that the crosslinked polyethylene cannot be recycled.

Therefore, there is an urgent need for a new composition for an insulating layer, which may endure a maximum allowable temperature of 90°C of a conductor without using a crosslinked polyethylene, and a compact electric cable including such a composition for an insulating layer.

JP 2004-528681 A discloses an electric cable comprising at least one conductor and an insulating layer surrounding the conductor, wherein an insulating composition forming the insulation layer comprises non-crosslinked polypropylenes.

JP 2009-019190 A discloses an electric cable comprising at least one conductor and an insulation layer surrounding the conductor, wherein an insulation composition forming the insulation layer comprises 60 to 90 wt% of a reactive polypropylene, and 40 to 10 wt% of a polypropylene.

US 2006/074177 A1 and US 2009/142527 A1 disclose an electric cable with an insulating composition based on polypropylene. These cables are expected to have an maximum allowable temperature of 110 to 120 °C.

DISCLOSURE

Technical Problem

The present disclosure is directed to providing an insulating composition capable of ensuring a maximum allowable temperature of 90°C of a conductor.

The present disclosure is also directed to providing an insulating composition containing a non-crosslinking polymer, which does not need a crosslinking process.

The present disclosure is also directed to providing a compact electric cable having a conductor whose diameter is minimized by using the non-crosslinking polymer as an insulating material.

Technical Solution

In one aspect of the present disclosure, there is provided an electric cable, comprising the features of claim 1.

The reactive polypropylene is one selected from the group consisting of an ethylene-propylene rubber (EPR), an ethylene-propylene-diene rubber (EPDM), mixtures thereof, and reactive polyolefin (RTPO) prepared by polymerizing propylene monomers, and the polypropylene is at least one selected from the group consisting of random polypropylene, homo polypropylene and block polypropylene.

In still another aspect of the present disclosure, in an electric cable including at least one conductor and an insulating layer surrounding the conductor, an insulating composition for forming the insulating layer is the insulating composition defined in any one of the above aspects.

The conductor may have a nominal cross-sectional area smaller by at least 15% than a nominal cross-sectional area of a conductor specified in IEC Standards 60502-2, when the same allowable current is applied.

The electric cable may further include an interior semiconductive layer surrounding the conductor; an exterior semiconductive layer surrounding the insulating layer; a shielding layer surrounding the exterior semiconductive layer; and a sheath layer surrounding the shielding layer. At this time, the interior semiconductive layer and the exterior semiconductive layer may be made of a composition including a non-crosslinking polypropylene base resin and carbon black.

Advantageous Effects

According to the present disclosure, since a conductor having a nominal cross-sectional area smaller by at least 15% than a nominal cross-sectional area of a conductor specified in IEC Standards 60502-2 when the same allowable current is applied may be used for an electric cable, it is easy to make an electric cable with a lightweight and compact design. In addition, when the conductor has a nominal cross-sectional area specified in IEC Standards 60502-2, the electric cable of the present disclosure has a maximum allowable current higher by at least 10% than a maximum allowable current specified in the IEC Standards 60502-2.

In addition, according to the electric cable of the present disclosure, problems such as increased costs for a crosslinking process, deteriorated insulating performance caused by crosslinking byproducts or the like do not occur. Moreover, the insulating material of the electric cable may be recycled.

DESCRIPTION OF DRAWINGS

The accompanying drawings, which are incorporated in and form a part of the specification, illustrate preferred embodiments of the present disclosure and, together with the detailed description of the preferred embodiments, serve to explain the principles of the present disclosure. In the drawings:

Fig. 1 is a cross-sectional view showing a general electric cable;

Fig. 2 is a cross-sectional view showing a traditional embodiment of an electric cable according to the present disclosure;

Fig. 3 is a photograph showing a section of an electric cable prepared according to Example 2 of Table 3;

Fig. 4 is a photograph showing a section of an electric cable prepared according to Example 4 of Table 3; and

Fig. 5 is a photograph showing a section of an electric cable prepared according to Comparative Example 1 of Table 3.

BEST MODE

Hereinafter, the present disclosure will be described in detail.

The present disclosure is directed to an electric cable including at least one conductor and an insulating layer surrounding the conductor.

Fig. 2 is a cross-sectional view showing a traditional embodiment of an electric cable according to the present disclosure.

Referring to Fig. 2, the electric cable of the present disclosure includes at least one conductor 11, an interior semiconductive layer 12 surrounding the conductor 11, an insulating layer 13 surrounding the interior semiconductive layer 12, an exterior semiconductive layer 14 surrounding the insulating layer 13, a shielding layer 15 made of a metal shield or a copper tape and surrounding the exterior semiconductive layer 14 and a sheath layer 16 surrounding the shielding layer 15.

Fig. 2 shows a most traditional structure of the electric cable of the present disclosure, but the structure of the electric cable of the present disclosure is not limited thereto. In other words, the electric cable of the present disclosure may also have a modified structure in which at least one of the interior semiconductive layer, the exterior semiconductive layer and the shielding layer is excluded.

The electric cable of the present disclosure has a distinctive feature in that the conductor has a diameter (or a nominal cross-sectional area) greatly smaller than a diameter (or a nominal cross-sectional area) of a conductor of a conventional electric cable. In other words, the conductor has a nominal cross-sectional area smaller by at least 15% than a nominal cross-sectional area of a conductor specified in IEC Standards 60502-2, when the same allowable current is applied.

By doing so, the outer diameter of the entire electric cable is reduced, thereby creating a compact and lightweight cable.

However, in this case, the maximum allowable temperature of the conductor may increase over 90°C, so that it is 110°C or above and 120°C or below. At this time, if existing crosslinked polyethylene is used as a material of the insulating layer surrounding the conductor, the insulating material is not able to endure the high temperature of the conductor.

Therefore, in the present disclosure, non-crosslinking polypropylene is applied to the insulating layer as an insulating composition capable of enduring a maximum allowable temperature of 110°C to 120°C of the conductor. Accordingly, the electric cable of the present disclosure has a maximum allowable current higher by at least 10% than a maximum allowable current specified in the IEC Standards 60502-2, when the conductor has a nominal cross-sectional area specified in IEC Standards 60502-2.

In addition, the insulating composition of the present disclosure may further include additives such as an antioxidant or a nucleating agent. The antioxidant of the present disclosure may use, for example, a compound such as 3,5-bis (1,1-dimethylethyl)-4-hydroxy benzenepropanoic acid octadecyl ester.

The nucleating agent of the present disclosure is an additive which promotes a crystallization rate of polypropylene so that the insulating layer may keep its circular shape, decreases the size of crystals to improve the transparency, and enhances mechanical properties. The nucleating agent may employ talc, silica, kaolin, organic carbonate, carboxylic acid polymer, organic phosphate or the like.

The insulating composition according to the present invention contains reactive polypropylene and polypropylene.

Here, the 'reactive polypropylene' represents a polymer which is obtained by polymerizing propylene monomers and exhibits rubber characteristics. A general reactor-made thermoplastic polyolefin (RTPO) is also included in the 'reactive polypropylene' if the olefin is propylene or if an olefin other than propylene is included. In the present disclosure, the reactive polypropylene plays a role of improving flexibility of the insulating layer.

In more detail, the insulating composition according to the present disclosure includes 60 to 90 weight% of reactive polypropylene and 40 to 10 weight% of polypropylene.

At this time, if the content of reactive polypropylene is smaller than 60 weight% (or, if the content of polypropylene is greater than 40 weight%), elongation and cold resistance are bad due to the increasing content of hard polypropylene. If the content of reactive polypropylene is greater than 90 weight% (or, if the content of polypropylene is smaller than 10 weight%), modulus of elasticity and thermal strain are bad, which may cause the insulating layer to be released from the conductor.

If polypropylene having a softening point (about 140 to 160°C) higher than that (about 57°C) of reactive polypropylene is used within the above content range in addition to reactive polypropylene, the shrinkage of the insulating layer may be greatly reduced during a cooling process of the cable manufacturing method, ensuring that the cable is not pressed. Therefore, reactive polypropylene and polypropylene are preferably used within the above content ranges.

Reactive polypropylene available in the present invention is one selected from the group consisting of an ethylene-propylene rubber (EPR), an ethylene-propylene-diene rubber (EPDM), mixtures thereof, and reactive polyolefin (RTPO) prepared by polymerizing propylene monomers.

In addition, polypropylene available in the present invention is at least one selected from the group of random polypropylene, homo polypropylene and block polypropylene.

As described above, the present disclosure uses non-crosslinking polypropylene, namely a composition containing polypropylene and reactive polypropylene which is a non-crosslinking resin as an insulating material for forming the insulating layer. Therefore, production costs may be reduced since a separate crosslinking process need not be performed. In addition, even though in the prior art, peroxides serving as a crosslinking agent are abnormally decomposed in an extruder before an extruded polymer is normally crosslinked, which causes undesired crosslinking and abnormal extrusion, these problems do not occur in the present disclosure.

Moreover, in the electric cable of the present disclosure, the interior semiconductive layer 12 and the exterior semiconductive layer 14 are made of a composition containing a non-crosslinking polypropylene base resin and carbon black, and the composition may optionally further contain other additives.

MODE FOR DISCLOSURE

In the level of 18/30 kV, when a conductor of an electric cable has a nominal cross-sectional area specified in IEC Standards 60502-2, the conductor according to the present disclosure, surrounded by the insulating layer made of non-crosslinking polypropylene, may transmit a maximum allowable current at least 1.00 times greater (a maximum allowable current greater by at least 10%) than that of a conductor surrounded by a general insulating layer made of crosslinked polyethylene. This may be checked by comparing a structure of an electric cable in the level of 18/30 kV having a general insulating layer made of crosslinked polyethylene (the In air / flat touching structure in Table B.2, Appendix B of IEC 60502-2) and a maximum allowable current of a conductor , as shown in Table 1 below, with a structure of an electric cable in the level of 18/30 kV having an insulating layer made of non-crosslinking polypropylene according to the present disclosure (the In air / flat touching structure in Table B.2, Appendix B of IEC 60502-2) and a maximum allowable current of a conductor , as shown in Table 2 below.

Table 1

| conductor | | | | insulating layer | sheath layer | electric cable |
| --- | --- | --- | --- | --- | --- | --- |
| nominal cross-sectional area (mm$^2$) | shape | outer diameter (mm) | maximum allowable current (A) | thickness (mm) | thickness (mm) | outer diameter (mm) |
| 95 | circular compression | 11.4 | 369 | 8.0 | 2.1 | 38 |
| 120 | circular compression | 12.9 | 426 | 8.0 | 2.1 | 40 |
| 150 | circular compression | 14.4 | 481 | 8.0 | 2.1 | 41 |
| 185 | circular compression | 15.9 | 550 | 8.0 | 2.2 | 43 |
| 240 | circular compression | 18.3 | 647 | 8.0 | 2.3 | 46 |
| 300 | circular compression | 20.5 | 739 | 8.0 | 2.4 | 48 |
| 400 | circular compression | 23.2 | 837 | 8.0 | 2.5 | 51 |

Table 2

| conductor | | | | insulating layer | sheath layer | electric cable |
| --- | --- | --- | --- | --- | --- | --- |
| nominal cross-sectional area (mm$^2$) | shape | outer diameter (mm) | maximum allowable current (A) | thickness (mm) | thickness (mm) | outer diameter (mm) |
| 70 | circular compression | 9.8 | 370 | 8.0 | 2.0 | 36 |
| 95 | circular compression | 11.4 | 427 | 8.0 | 2.1 | 38 |
| 120 | circular compression | 12.9 | 491 | 8.0 | 2.1 | 40 |
| 150 | circular compression | 14.4 | 552 | 8.0 | 2.1 | 41 |
| 185 | circular compression | 15.9 | 650 | 8.0 | 2.2 | 43 |
| 240 | circular compression | 18.3 | 741 | 8.0 | 2.3 | 46 |
| 300 | circular compression | 20.5 | 839 | 8.0 | 2.4 | 48 |
| 400 | circular compression | 23.2 | 945 | 8.0 | 2.5 | 51 |

The maximum allowable currents in Tables 1 and 2 have been calculated by Equation 1 below according to IEC Standards 60287.

## Equation 1

$$I = \left[\frac{\Delta\theta - W_d[0.5T_1 + n(T_3 + T_4)]}{RT_1 + nR(1+\lambda_1)(T_3 + L_f \cdot T_4)}\right]^{1/2}$$

I: maximum allowable current (A) of a conductor

$\Delta\theta$: a value obtained by subtracting an atmospheric temperature from a maximum allowable temperature (°C) (a maximum allowable current of a conductor surrounded by an insulating layer made of crosslinked polyethylene is set to be 90°C, a maximum allowable current of a conductor surrounded by an insulating layer made of non-crosslinking polypropylene is set to be 110°C, and the atmospheric temperature is set to be 30°C)

$W_d$: dielectric loss per unit length of the insulating layer surrounding the conductor (W/m)

$T_1$: thermal resistance per unit length between the conductor and the sheath layer (K.m/W)

$T_3$: thermal resistance of the sheath layer (K.m/W)

$T_4$: thermal resistance out of the sheath layer (K.m/W)

R: AC resistance per unit length of the conductor at a maximum allowable temperature of the conductor ($\Omega$/m)

n: the number of conductors included in the cable

$\lambda_1$: circuit loss factor

$L_f$: load loss factor

Even though Tables 1 and 2 show only the level of 18/30 kV as an example, the same results are obtained in the levels of 6/10 kV and 12/20 kV.

Hereinafter, examples of the present disclosure will be described in detail. The examples of the present disclosure, however, may take several other forms, and the scope of the present disclosure should not be construed as being limited to the following examples. The embodiments of the present disclosure are provided to more fully explain the present disclosure to those having ordinary knowledge in the art to which the present disclosure pertains.

Examples 1 to 4 and Comparative Examples 1 to 3

After preparing an electric cable including a conductor surrounded by an insulating material (forming an insulating layer) made of a composition having the content (weight%) shown in Table 3 below, properties of the insulating material included in the electric cable were tested.

Table 3

| | | | | | | | [unit: weight%] |
|---|---|---|---|---|---|---|---|
| | Example 1 | Example 2 | Example 3 | Example 4 | Comparative Example 1 | Comparative Example 2 | Comparative Example 3 |
| reactive polypropylene | 90 | 80 | 70 | 60 | 100 | 50 | |
| random polypropylene crosslinked polyethylene | 10 | 20 | 30 | 40 | 0 | 50 | |
| * reactive polypropylene: CA7441A produced by Basel<br>* random polypropylene: RP-242G produced by Basel<br>* crosslinked polyethylene: obtained by dielectric-extruding and crosslinking XL-8080NT (XLPE) produced by LG Chem | | | | | | | |

Measurement and Evaluation of Properties

Mechanical properties (tensile strength, tensile elongation), modulus of elasticity (storage modulus, loss modulus) at normal temperature, cold resistance and thermal strain of the prepared electric cable were measured. The measurement results are shown in Table 4 below. Experiment conditions are as follows in brief.

(a) Mechanical properties at normal temperature

The insulating material of the cable should have a tensile strength of 1.26 kgf/mm$^2$ or above and a tensile elongation of 200% or above, when being measured at a tensile rate of 250 mm/min pursuant to IEC 60811-1-1 (ICEA S-94-649).

(b) Modulus of elasticity

The insulating material of the cable should have a storage modulus of 80 Mpa or below and a loss modulus of 12 Mpa, when being measured by means of DMA.

(c) Cold resistance

The insulating material of the cable should have cold resistance not to cause breakdown or cracking at -40 °C, when being measured according to a method specified in KS C IEC 60811.

(d) Thermal strain

The insulating material of the cable should have thermal strain of 50%, when being measured according to the method of IEC 60811-3-1.

Table 4

| | Example 1 | Example 2 | Example 3 | Example 4 | Comparative Example 1 | Comparative Example 2 | Comparative Example 3 |
|---|---|---|---|---|---|---|---|
| tensile strength (kgf/mm$^2$) | 2.202 | 2.544 | 2.572 | 2.756 | 2.488 | 2.818 | 2.319 |
| tensile elongation (%) | 600.39 | 631.43 | 623.31 | 618.19 | 630.80 | 556.01 | 497.12 |
| storage modulus (MPa) | 43.23 | 56.53 | 68.47 | 75.78 | 30.88 | 62.52 | 90.76 |
| loss modulus (MPa) | 7.02 | 8.21 | 9.41 | 10.75 | 4.74 | 10.22 | 17.78 |
| cold resistance | pass | pass | pass | pass | pass | fail | pass |
| thermal strain (%) | 18.39 | 9.26 | 9.84 | 3.48 | 72.48 | 6.23 | 30.20 |

As shown in Table 4, all the insulating materials according to Examples 1 to 4 of the present disclosure (which includes reactive polypropylene and random polypropylene) satisfy criterion values in terms of tensile strength, tensile elongation, storage modulus, loss modulus, cold resistance and thermal strain. However, Comparative Example 1 (including only reactive polypropylene) shows a thermal strain that is too high, and Comparative Example 3 (including only crosslinked polyethylene) shows a somewhat high thermal strain.

Meanwhile, Comparative Example 2 includes reactive polypropylene and random polypropylene, but their contents are beyond the ranges defined in the present disclosure. Comparative Example 2 does not meet the cold resistance criterion.

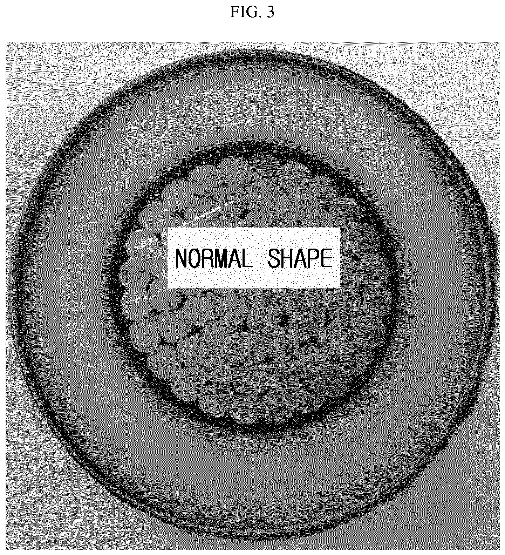

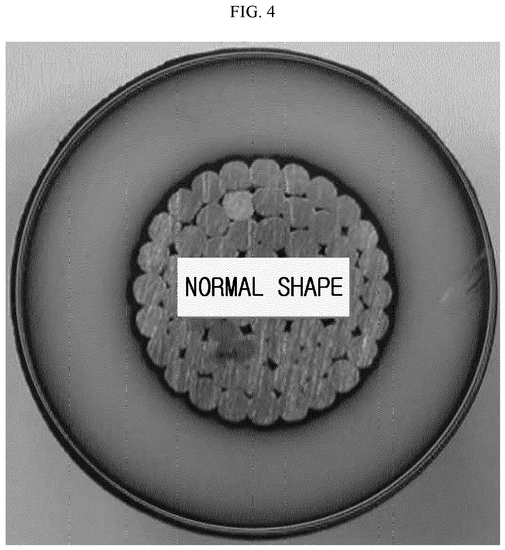

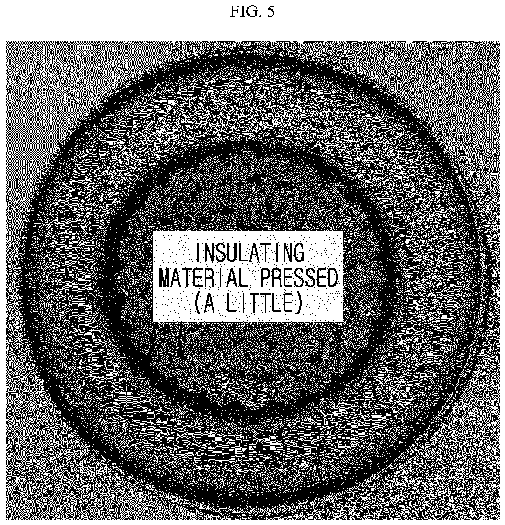

On the other hand, Figs. 3 to 5 are photographs respectively showing sections of the cables according to Examples 2 and 4 and Comparative Example 1. As shown in the photographs, in Examples 2 and 4 of the present disclosure (Figs. 3 and 4), the insulating material maintains a normal circular shape without being pressed. However, in Comparative Example 1 (Fig. 5), the insulation material is pressed and has a bad appearance.

The present disclosure has been described in detail.

INDUSTRIAL APPLICABILITY

The insulating composition according to the present disclosure may be applied to all kinds of electric cables having various structures, which include at least one conductor and an insulating layer surrounding the conductor.

**Claims**

1. An electric cable, which includes at least one conductor and an insulating layer surrounding the conductor,

wherein an insulating composition for forming the insulating contains a non-crosslinked polypropylene comprising a reactive polypropylene selected from the group consisting of an ethylene-propylene rubber (EPR), an ethylene-propylene-diene rubber (EPDM), or mixtures thereof, and polypropylene, which has a softening point higher than that of the reactive polypropylene, comprising at least one selected from the group consisting of random polypropylene, homopolypropylene and block polypropylene, so that the conductor has a maximum allowable temperature of 110°C to 120°C, and
wherein when the conductor has a nominal cross-sectional area specified in IEC Standards 60502-2, the conductor has a maximum allowable current higher by at least 10% than a maximum allowable current calculated by Equation 1

$$ \text{Equation 1} $$

$$ I = \left[ \frac{\triangle\Theta - W_d[0.5T_1 + n(T_3 + T_4)]}{RT_1 + nR(1+\lambda_1)(T_3 + L_f \cdot T_4)} \right]^{1/2} $$

I: maximum allowable current (A) of a conductor
$\triangle\theta$: a value obtained by subtracting an atmospheric temperature from a maximum allowable temperature (°C) (a maximum allowable current of a conductor surrounded by an insulating layer made of crosslinked polyethylene is set to be 90°C, a maximum allowable current of a conductor surrounded by an insulating layer made of non-crosslinking polypropylene is set to be 110°C, and the atmospheric temperature is set to be 30°C)
$W_d$: dielectric loss per unit length of the insulating layer surrounding the conductor (W/m)
$T_1$: thermal resistance per unit length between the conductor and the sheath layer (K.m/W)
$T_3$: thermal resistance of the sheath layer (K.m/W)
$T_4$: thermal resistance out of the sheath layer (K.m/W)
R: AC resistance per unit length of the conductor at a maximum allowable temperature of the conductor ($\Omega$/m)
n: the number of conductors included in the cable
$\lambda_1$: circuit loss factor
$L_f$: load loss factor

2. The electric cable according to claim 1, further comprising:

an interior semiconductive layer surrounding the conductor;
an exterior semiconductive layer surrounding the insulating layer;
a shielding layer surrounding the exterior semiconductive layer; and
a sheath layer surrounding the shielding layer.

3. The electric cable according to claim 1, wherein the conductor has a nominal cross-sectional area smaller by at least 15% than a nominal cross-sectional area of a conductor specified in IEC Standards 60502-2, when the same allowable current is applied.

4. The electric cable according to claim 2, wherein the interior semiconductive layer and the exterior semiconductive layer are made of a composition including a non-crosslinked polypropylene base resin and carbon black.

5. The electric cable according to claim 3, wherein the insulating composition further includes an antioxidant.

6. An insulating composition for forming an insulating layer surrounding at least one conductor,

wherein an insulating composition for forming the insulating contains a non-crosslinked polypropylene comprising a reactive polypropylene selected from the group consisting of an ethylene-propylene rubber (EPR), an ethylene-propylene-diene rubber (EPDM), or mixtures thereof, and polypropylene, which has a softening point higher than that of the reactive polypropylene, comprising at least one selected from the group consisting of random polypropylene, homopolypropylene and block polypropylene, so that the conductor has a maximum allowable temperature of 110°C to 120°C, and

wherein when the conductor has a nominal cross-sectional area specified in IEC Standards 60502-2, the conductor has a maximum allowable current higher by at least 10% than a maximum allowable current calculated by Equation 1

## Equation 1

$$I = \left[ \frac{\Delta\Theta - W_d[0.5T_1 + n(T_3 + T_4)]}{RT_1 + nR(1+\lambda_1)(T_3 + L_f \cdot T_4)} \right]^{1/2}$$

I: maximum allowable current (A) of a conductor

$\triangle\theta$: a value obtained by subtracting an atmospheric temperature from a maximum allowable temperature (°C) (a maximum allowable current of a conductor surrounded by an insulating layer made of crosslinked polyethylene is set to be 90°C, a maximum allowable current of a conductor surrounded by an insulating layer made of non-crosslinking polypropylene is set to be 110°C, and the atmospheric temperature is set to be 30°C)

$W_d$: dielectric loss per unit length of the insulating layer surrounding the conductor (W/m)

$T_1$: thermal resistance per unit length between the conductor and the sheath layer (K.m/W)

$T_3$: thermal resistance of the sheath layer (K.m/W)

$T_4$: thermal resistance out of the sheath layer (K.m/W)

R: AC resistance per unit length of the conductor at a maximum allowable temperature of the conductor ($\Omega$/m)

n: the number of conductors included in the cable

$\lambda_1$: circuit loss factor

$L_f$: load loss factor

7. The insulating composition according to claim 6, further comprising an antioxidant.

**Patentansprüche**

1. Stromkabel, welches mindestens einen Leiter und eine den Leiter umgebende Isolierschicht umfasst,

wobei eine Isolierzusammensetzung zur Ausbildung der Isolierung ein nicht vernetztes Polypropylen enthält, das ein reaktives Polypropylen, das aus der Gruppe ausgewählt ist, die aus einem Ethylen-Propylen-Kautschuk (EPR), einem Ethylen-Propylen-Dien-Kautschuk (EPDM) oder Mischungen davon besteht, und Polypropylen umfasst, das einen Erweichungspunkt aufweist, der höher als der des reaktiven Polypropylens ist, und mindestens eines umfasst, das aus der Gruppe ausgewählt ist, die aus statistischem Polypropylen, Homopolypropylen und Block-Polypropylen besteht, so dass der Leiter eine maximal zulässige Temperatur von 110°C bis 120°C aufweist, und

wobei der Leiter, wenn der Leiter eine in den IEC-Normen 60502-2 festgelegte Nennquerschnittsfläche aufweist, einen maximal zulässigen Strom aufweist, der um mindestens 10 % höher als ein durch die Gleichung 1 berechneter maximal zulässiger Strom ist

## Gleichung 1

$$I = \left[ \frac{\Delta\Theta - W_d[0.5T_1 + n(T_3 + T_4)]}{RT_1 + nR(1+\lambda_1)(T_3 + L_f \cdot T_4)} \right]^{1/2}$$

I: maximal zulässiger Strom (A) eines Leiters

$\triangle\theta$: ein Wert, der erhalten wird, indem eine atmosphärische Temperatur von einer maximal zulässigen Temperatur (°C) subtrahiert wird (ein maximal zulässiger Strom eines von einer Isolierschicht aus vernetztem Polyethylen umgebenen Leiters ist auf 90°C eingestellt, ein maximal zulässiger Strom eines von einer Isolierschicht aus nicht vernetzendem Polypropylen umgebenen Leiters ist auf 110°C eingestellt und die atmosphärische Temperatur ist auf 30°C eingestellt)

$W_d$: dielektrischer Verlust pro Einheitslänge der den Leiter umgebenden Isolierschicht (W/m)

$T_1$: thermischer Widerstand pro Einheitslänge zwischen dem Leiter und der Ummantelungsschicht (K.m/W)

$T_3$: thermischer Widerstand der Ummantelungsschicht (K.m/W)

$T_4$: thermischer Widerstand außerhalb der Ummantelungsschicht (K.m/W)

R: Wechselstromwiderstand pro Einheitslänge des Leiters bei einer maximal zulässigen Temperatur des Leiters (Ω/m)

n: die Anzahl von in dem Kabel umfassten Leitern

$\lambda_1$: Verlustfaktor des Stromkreises

$L_f$: Lastverlustfaktor

2. Stromkabel nach Anspruch 1, des Weiteren umfassend:

eine den Leiter umgebende innere halbleitende Schicht;
eine die Isolierschicht umgebende äußere halbleitende Schicht;
eine die äußere halbleitende Schicht umgebende Abschirmschicht; und
eine die Abschirmschicht umgebende Ummantelungsschicht.

3. Stromkabel nach Anspruch 1, wobei der Leiter eine Nennquerschnittsfläche aufweist, die um mindestens 15 % kleiner als eine in den IEC-Normen 60502-2 festgelegte Nennquerschnittsfläche eines Leiters ist, wenn der gleiche zulässige Strom angelegt wird.

4. Stromkabel nach Anspruch 2, wobei die innere halbleitende Schicht und die äußere halbleitende Schicht aus einer Zusammensetzung hergestellt sind, die ein Grundharz aus nicht vernetztem Polypropylen und Ruß umfasst.

5. Stromkabel nach Anspruch 3, wobei die Isolierzusammensetzung des Weiteren ein Antioxidans umfasst.

6. Isolierzusammensetzung zur Ausbildung einer mindestens einen Leiter umgebenden Isolierschicht,

wobei eine Isolierzusammensetzung zur Ausbildung der Isolierung ein nicht vernetztes Polypropylen enthält, das ein reaktives Polypropylen, das aus der Gruppe ausgewählt ist, die aus einem Ethylen-Propylen-Kautschuk (EPR), einem Ethylen-Propylen-Dien-Kautschuk (EPDM) oder Mischungen davon besteht, und Polypropylen umfasst, das einen Erweichungspunkt aufweist, der höher als der des reaktiven Polypropylens ist, und mindestens eines umfasst, das aus der Gruppe ausgewählt ist, die aus statistischem Polypropylen, Homopolypropylen und Block-Polypropylen besteht, so dass der Leiter eine maximal zulässige Temperatur von 110°C bis 120°C aufweist, und

wobei der Leiter, wenn der Leiter eine in den IEC-Normen 60502-2 festgelegte Nennquerschnittsfläche aufweist, einen maximal zulässigen Strom aufweist, der um mindestens 10 % höher als ein durch die Gleichung 1 berechneter maximal zulässiger Strom ist

Gleichung 1

$$I = \left[ \frac{\Delta \Theta - W_d[0.5T_1 + n(T_3 + T_4)]}{RT_1 + nR(1+\lambda_1)(T_3 + L_f \cdot T_4)} \right]^{1/2}$$

I: maximal zulässiger Strom (A) eines Leiters

θ: ein Wert, der erhalten wird, indem eine atmosphärische Temperatur von einer maximal zulässigen Temperatur (°C) subtrahiert wird (ein maximal zulässiger Strom eines von einer Isolierschicht aus vernetztem Polyethylen umgebenen Leiters ist auf 90°C eingestellt, ein maximal zulässiger Strom eines von einer Isolierschicht aus nicht vernetzendem Polypropylen umgebenen Leiters ist auf 110°C eingestellt und die atmosphärische Temperatur ist auf 30°C eingestellt)

$W_d$: dielektrischer Verlust pro Einheitslänge der den Leiter umgebenden Isolierschicht (W/m)

$T_1$: thermischer Widerstand pro Einheitslänge zwischen dem Leiter und der Ummantelungsschicht (K.m/W)

$T_3$: thermischer Widerstand der Ummantelungsschicht (K.m/W)

$T_4$: thermischer Widerstand außerhalb der Ummantelungsschicht (K.m/W)

R: Wechselstromwiderstand pro Einheitslänge des Leiters bei einer maximal zulässigen Temperatur des Leiters (Ω/m)

n: die Anzahl von in dem Kabel umfassten Leitern

$\lambda_1$: Verlustfaktor des Stromkreises

$L_f$: Lastverlustfaktor

**7.** Isolierzusammensetzung nach Anspruch 6, des Weiteren umfassend ein Antioxidans.

**Revendications**

**1.** Câble électrique qui comprend au moins un conducteur et une couche isolante entourant le conducteur,

dans lequel une composition isolante pour la formation de l'isolant contient un polypropylène non réticulé comprenant un polypropylène réactif choisi dans le groupe qui se compose d'un caoutchouc éthylène-propylène (EPR), d'un caoutchouc éthylène-propylène-diène (EPDM) ou de mélanges de ceux-ci, et du polypropylène qui a un point de ramollissement supérieur à celui-ci du polypropylène réactif et qui comprend au moins un choisi dans le groupe qui se compose de polypropylène aléatoire, d'homopolypropylène et de polypropylène bloc de sorte que le conducteur a une température maximale admissible de 110°C à 120°C, et

dans lequel, lorsque le conducteur a une superficie nominale de la section transversale déterminée dans les normes 60502-2 de la CEI, le conducteur a un courant maximal admissible supérieur d'au moins 10 % à un courant maximal admissible calculé par l'équation 1

équation 1

$$I = \left[ \frac{\Delta\theta - W_d[0.5T_1 + n(T_3 + T_4)]}{RT_1 + nR(1+\lambda_1)(T_3 + L_f \cdot T_4)} \right]^{1/2}$$

I : courant maximal admissible (A) d'un conducteur

$\triangle\theta$: une valeur obtenue par la soustraction d'une température atmosphérique d'une température maximale admissible (°C) (un courant maximal admissible d'un conducteur entouré par une couche isolante en polyéthylène réticulé est fixé à 90°C, un courant maximal admissible d'un conducteur entouré par une couche isolante en polypropylène non réticulant est fixé à 110°C, et la température atmosphérique est fixée à 30°C)

$W_d$: perte diélectrique par longueur d'unité de la couche isolante entourant le conducteur (W/m)

$T_1$: résistance thermique par longueur d'unité entre le conducteur et la couche de gaine (K.m/W)

$T_3$: résistance thermique de la couche de gaine (K.m/W)

$T_4$: résistance thermique en dehors de la couche de gaine (K.m/W)

R : résistance c.a. par longueur d'unité du conducteur à une température maximale admissible du conducteur (Ω/m)

n : le nombre de conducteurs compris dans le câble

$\lambda_1$: facteur de perte du circuit

$L_f$: facteur de perte de charge

**2.** Câble électrique selon la revendication 1, comprenant en outre :

une couche semi-conductrice intérieure entourant le conducteur ;

une couche semi-conductrice extérieure entourant la couche isolante ;

une couche de blindage entourant la couche semi-conductrice extérieure ; et

une couche de gaine entourant la couche de blindage.

**3.** Câble électrique selon la revendication 1, dans lequel le conducteur a une superficie nominale de la section transversale inférieure d'au moins 15 % à une superficie nominale de la section transversale d'un conducteur déterminé dans les normes 60502-2 de la CEI lorsque le même courant admissible est appliqué.

**4.** Câble électrique selon la revendication 2, dans lequel la couche semi-conductrice intérieure et la couche semi-conductrice extérieure sont faites d'une composition comprenant une résine de base en polypropylène non réticulé et du noir de carbone.

**5.** Câble électrique selon la revendication 3, dans lequel la composition isolante comprend en outre un antioxydant.

**6.** Composition isolante pour la formation d'une couche isolante entourant au moins un conducteur,

dans lequel une composition isolante pour la formation de l'isolant contient un polypropylène non réticulé comprenant un polypropylène réactif choisi dans le groupe qui se compose d'un caoutchouc éthylène-propylène (EPR), d'un caoutchouc éthylène-propylène-diène (EPDM) ou de mélanges de ceux-ci, et du polypropylène qui a un point de ramollissement supérieur à celui-ci du polypropylène réactif et qui comprend au moins un choisi dans le groupe qui se compose de polypropylène aléatoire, d'homopolypropylène et de polypropylène bloc de sorte que le conducteur a une température maximale admissible de 110°C à 120°C, et

dans lequel, lorsque le conducteur a une superficie nominale de la section transversale déterminée dans les normes 60502-2 de la CEI, le conducteur a un courant maximal admissible supérieur d'au moins 10 % à un courant maximal admissible calculé par l'équation 1

<div align="center">

équation 1

$$I = \left[ \frac{\Delta\Theta - W_d[0.5T_1 + n(T_3 + T_4)]}{RT_1 + nR(1 + \lambda_1)(T_3 + L_f \cdot T_4)} \right]^{1/2}$$

</div>

$I$ : courant maximal admissible (A) d'un conducteur

$\triangle\theta$: une valeur obtenue par la soustraction d'une température atmosphérique d'une température maximale admissible (°C) (un courant maximal admissible d'un conducteur entouré par une couche isolante en polyéthylène réticulé est fixé à 90°C, un courant maximal admissible d'un conducteur entouré par une couche isolante en polypropylène non réticulant est fixé à 110°C, et la température atmosphérique est fixée à 30°C)

$W_d$: perte diélectrique par longueur d'unité de la couche isolante entourant le conducteur (W/m)

$T_1$: résistance thermique par longueur d'unité entre le conducteur et la couche de gaine (K.m/W)

$T_3$: résistance thermique de la couche de gaine (K.m/W)

$T_4$: résistance thermique en dehors de la couche de gaine (K.m/W)

$R$: résistance c.a. par longueur d'unité du conducteur à une température maximale admissible du conducteur (Ω/m)

$n$ : le nombre de conducteurs compris dans le câble

$\lambda_1$: facteur de perte du circuit

$L_f$: facteur de perte de charge

**7.** Composition isolante selon la revendication 6, comprenant en outre un antioxydant.

FIG. 1

FIG. 2

FIG. 3

NORMAL SHAPE

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004528681 A
- JP 2009019190 A
- US 2006074177 A1
- US 2009142527 A1